**Europäisches Patentamt**

**European Patent Office**

**Office européen des brevets**

(19)

(11) Veröffentlichungsnummer: **0 164 552**
**B1**

(12)

# EUROPÄISCHE PATENTSCHRIFT

(45) Veröffentlichungstag der Patentschrift: **11.07.90**

(51) Int. Cl.⁵: **C 01 B 33/32**

(21) Anmeldenummer: **85105330.6**

(22) Anmeldetag: **02.05.85**

(54) Verfahren zur Herstellung von kristallinen Natriumsilikaten.

(30) Priorität: **12.05.84 DE 3417649**

(43) Veröffentlichungstag der Anmeldung:
**18.12.85 Patentblatt 85/51**

(45) Bekanntmachung des Hinweises auf die
Patenterteilung:
**11.07.90 Patentblatt 90/28**

(84) Benannte Vertragsstaaten:
**BE CH DE FR GB IT LI NL SE**

(56) Entgegenhaltungen:
DE-B-1 938 756
US-A-2 017 561
US-A-2 116 423
US-A-3 285 859
US-A-3 377 134

SOVIET INVENTIONS ILLUSTRATED, Sektion
Chemikal, Woche K21, Zusammenfassungsnr.
51306 J01 E34, 6. Juli 1983, Derwent
Publications Ltd., London, GB; & SU - A - 943
201 (PHYS CHEM INST) 15.07.1982

(73) Patentinhaber: **HOECHST
AKTIENGESELLSCHAFT**
**Postfach 80 03 20**
**D-6230 Frankfurt am Main 80 (DE)**

(72) Erfinder: **Rieck, Hans-Peter, Dr.**
**Staufenstrasse 13a**
**D-6238 Hofheim am Taunus (DE)**

Courier Press, Leamington Spa, England.

**Beschreibung**

Die vorliegende Erfindung betrifft ein Verfahren zur Herstellung von kristallinen Natriumsilikaten mit einem Molverhältnis $SiO_2/Na_2O$ von 1,9:1 bis 3,5:1 aus amorphen Natriumsilikaten bei erhöhter Temperatur.

Die verschiedenen bekannten kristallinen Natriumsilikate lassen sich voneinander durch ihre Zusammensetzung — manchmal lediglich als $Na_2O:SiO_2$-Verhältnis angegeben — sowie durch ihr jeweils spezifisches Röntgenbeugungsdiagramm unterscheiden. Häufig läßt sich ein Natriumsilikat bei unveränderter Zusammensetzung mit unterschiedlicher Kristallstruktur herstellen. Die einzelnen Formen werden sich im allgemeinen in ihren physikalischen und chemischen Eigenschaften — wenn auch mit unter geringfügig — voneinander unterscheiden.

Es gehört zu den typischen Eigenschaften der kristallinen Natriumsilikate, daß sie mit äquivalenten Mengen an Salzsäure oder Schwefelsäure in freie Kieselsäuren überführt werden können. Die dazu notwendige Menge an Säure definiert die Ionenaustauschkapazität des Natriumsilikats und kann durch Titration bestimmt werden.

Die Herstellung der kristallinen Natriumsalze von Kieselsäuren mit einem $Na_2O:SiO_2$-Verhältnis von 1:2 bis 1:3 erfolgt überlicherweise durch Temperung von Natriumsilikat-Gläsern oder durch Erhitzen von Natriumcarbonat und Quarz (DE—OS 31 00 942).

Willgallis und Range (Glastechn. Ber., *37*, 194—200 (1964)) beschreiben die Herstellung von α- β- und γ-$Na_2Si_2O_5$ durch Temperung von geschmolzenem und nicht geschmolzenem entwässertem Natronwasserglas. Sie zeigen, daß in Abhängigkeit von der Temperatur verschiedene Kristallformen erhalten werden. Die Herstellung von δ-$Na_2Si_2O_5$ ist nach diesem Verfahren nicht möglich.

Benecke und Lagaly beschreiben in Am. Mineral., *62*, 763—771 (1977) ein Verfahren zur Herstellung eines hydratisierten Natriumsilikats mit Kanemit-Struktur. Dabei wird in einem ersten Schritt $SiO_2$ in Methanol dispergiert und mit kalter Natronlauge versetzt.

Das dort beschriebene Verfahren ist nicht nur relativ aufwendig bezüglich der kontrollierten Zugabe der einzelnen Substanzen, sondern erfordert auf Grund der Verwendung von Methanol (Brennbarkeit, Explosionsgefahr) spezielle Sicherheitsvorkehrungen.

Daneben ist es bekannt, die Kristallisation von Alkali -meta -Silikaten durch Einsatz von Impfkristallen zu fördern.

Kristalline Natriumsilikate eignen sich als verstärkende Füllstoffe in Natur- und Synthesekautschuk, Silikonkautschuk, Kunststoffen, Papier, für kosmetische und medizinische Anwendungen, als Trägerstoffe für Öle pflanzlicher und tierischer Herkunft und Biozide sowie für die selektive Absorptions und Verdickung, als Katalysator und Katalysatorträger. Beispiele für die Verwendung auf medizinischem und kosmetischem Gebiet sind kosmetische und medizinische Cremes und Salben, Zahnpasten, Puder und Gesichtsmasken. Kristalline Natriumsilikate mit einem Molverhältnis $SiO_2/Na_2O$ von 1,9:1 bis 3,5:1 verhalten sich ferner als Ionenaustauscher und lassen sich daher als Wasser enthärtende Mittel verwenden.

Da die bekannten Verfahren zur Herstellung dieser kristallinen Natriumsilikate sehr aufwendig sind, bestand die Aufgabe ein verbessertes Verfahren zu ihrer Herstellung aufzufinden. Dabei sollte ohne Zusatz organischer Lösungsmittel gearbeitet werden und gut kristalline Natriumsilikate (mit möglichst wenig Verunreinigung) anfallen. Dieses Verfahren sollte möglichst einfach durchführbar sein und ein Produkt liefern, das ohne großen Aufwand zerkleinert werden kann.

Das erfindungsgemäße Verfahren löst diese Aufgabe. Dieses Verahren zur Herstellung von kristallinen Natriumsilikaten mit Schichtstruktur und einem Molverhältnis $SiO_2/Na_2O$ von 1,9:1 bis 3,5:1 aus amorphem Natriumsilikat bei erhöter Temperatur ist dadurch gekennzeichnet, daß man wasserhaltiges amorphes Natriumsilikat mit einem Molverhältnis $SiO_2/Na_2O$ von 1,7:1 bis 3,75:1 und einem Wassergehalt von 5 bis 95 Gew.-% mit 0,01 bis 30 Gew.-Teilen des herzustellenden kristallinen Natriumsilikats (pro 100 Gew.-Teile $Na_2O + SiO_2$ im wasserhaltigen amorphen Natriumsilikat) versetzt, man die Reaktionsmischung durch Erhitzen entwässert und man die entwässerte Reaktionsmischung so lange bei einer Temperatur hält, die mindestens 450°C beträgt, jedoch unter dem Schmelzpunkt liegt, dis das Natriumsilikat kristallisiert ist.

Unter wasserhaltigem amorphem Natriumsiliat wird hier sowohl festes amorphes wie auch flüssiges Natriumsilikat (Wasserglas-Lösung) verstanden.

Für das Verfahren wird wasserhaltiges amorphes Natriumsilikat mit einem Wassergehalt von 5 bis 95 Gew.-%, vorzugsweise von 15 bis 75%, eingesetzt. Die Reaktionsmischung (ohne Impfkristalle) kann durch Auflösen von gefällter oder pyrogener Kieselsäure in Natronlauge hergestellt werden. Es ist jedoch bevorzugt, von den großtechnisch gut zugänglichen Natriumsilikaten mit einem Wassergehalt von 15 bis 26% (beispielsweise den Typen 3 Na, 3 NaTS, 5 Na, 5 NaTS der Société Française Hoechst) und insbesondere wäßrigen Wasserglaslösungen (beispielsweise Na 3/2, Na 4/1, Na 5/2, Na 6/2, Na 9/1, Na 10/2 der Société Française Hoechst mit einem Molverhältnis von $Na_2O:SiO_2$ von 1:2,01 bis 1:3,50 und einem Wassergehalt von etwa 50 bis 70 Gew.% einzusetzen. Besonders bevorzugt werden Natronwassergläser mit einem Molverhältnis $Na_2O:SiO_2$ von etwa 1:2,0 bis 1:2,3 oder etwa 1:3,3 bis 1:3,5.

Durch Zugabe von alkalischen oder sauren Verbindungen oder auch $SiO_2$ kann der Modul der Reaktionsmischung modifiziert werden. Als alkalische Verbindung kommen hier insbesondere Natriumcarbonat und vorzugsweise Natriumhydroxid in Frage. Eine Regulierung des Verhältnisses $Na_2O$

2

(nicht neutralisiert): SiO$_2$ durch Zugabe einer Säure, wie Schwefelsäure, Salzsäure oder Phosphorsäure ist möglich, sollte jedoch vermieden werden, da die Salze als Verunreinigungen in der Reaktionsmischung verbleiben. Soll SiO$_2$ zur Korrektur des Na$_2$O/SiO$_2$-Verhältnisses von allzu alkalischen Ausgangssilikaten zugesetzt werden, so wird hierfür insbesondere amorphe Kieselsäure verwendet. Kristalline schwerlösliche SiO$_2$-Formen wie Quarz, Tridymit und kristalliner Cristobalit sollten vermieden werden, da bei ihrer Verwendung erhöhte Reaktionszeiten erforderlich werden und die Reinheit des Produktes schlechter wird.

Der Zusatz von Kristallkeimen des gewünschten Natriumsilikats zur Reaktionsmischung ist wesentlich. Bereits Mengen von 0,01 Gew.-% beeinflussen die Kristallisation positiv; bevorzugt werden jedoch Mengen von 1 bis 15 Gew.-%. Eine Erhöhung des Zusatzes auf über 30 Gew.% (bezogen auf den wasserfreien Anteil der Reaktionsmischung) bringt keine weiteren Vorteile.

Die Zusammensetzung der Kristallkeime entspricht vorzugsweise der der reinen kristallinen Natriumsilikate. Das Na$_2$O:SiO$_2$-Verhältnis ist dadurch insbesondere 1:2 oder 1:3.

Vorzugsweise ist das gewählte Na$_2$O:SiO$_2$-Verhältnis der Reaktionsmischung gleich dem des zugegebenen kristallinen Natriumsilikats.

Die Kristallkeime des kristallinen Natriumsilikats werden der Reaktionsmischung zumindest teilweise vor der Entwässerung zugesetzt. Man kann den Rest der Kristallkeim auch unmittelbar nach der Entwässerung zusetzen. In allen Fällen ist eine gründliche Durchmischung vorteilhaft, da sie die gleichmäßige Verteilung und die Entstehung eines nahezu homogenen Endprodukts fördert. Sofern in einem Reaktionsgefäß nacheinander mehrere Kristallisations-Ansatze gefahren werden, ist es möglich, die Reaktionsgefäße nicht vollständig zu entleeren. Auch auf diese Weise gelangt eine ausreichende Menge von Impfkristallen des kristallinen Natriumsilikats in die Reaktionsmischung.

Bei Durchführung des erfindungsgemäßen Verfahrens entweicht nur Wasser; das Brutto-Molverhältnis Na$_2$O:SiO$_2$ ändert sich nicht oder nur unwesentlich, sofern etwas Na$_2$O verdampft. Daher sollte dieses Molverhältnis in der Ausgangsmischung möglichst dem des gewünschten Produkts entsprechen. Das in Form von Impfkristallen zugesetzte kristalline Natriumsilikat beeinflußt weitgehend das Molverhältnis des zunächst auskristallisierenden Natriumsilikats. Hat beispielsweise das amorphe Silikat ein Molverhältnis SiO$_2$:Na$_2$O von 2,5 und Impfkristalle von Na-SKS-6 (vgl. Seite 9) mit einem Molverhältnis Na$_2$O:SiO$_2$ von 2,0 werden zugesetzt, so wird ein Silikat erhalten, das in der Hauptsache aus Na-SKS-6 besteht und soviel einer silikatreicheren Komponente (z.B. Cristobalit) enthält, daß insgesamt ebenfalls ein Molverhältnis SiO$_2$:SiO$_2$ von 2,5 resultiert.

Die Temperatur der Entwässerung ist nicht kritisch. Temperaturen von 150 bis 400°C reichen aus. Im allgemeinen werden Ofentemperaturen von 200 bis 840°C verwendet. Jedoch beginnt die Wasserabspaltung schon bei etwa 140°.

In vielen Fällen wird beim Entwässern eine sirupöse Phase durchlaufen, die durch das Austreiben des Wasserdampfes aufschmäumt. Nach Beendigung der Entwässerung ist diese aufgeschäumte Masse jedoch wieder fest.

Die Kristallstruktur wird nicht nur durch die Art der Impfkristalle, sondern auch durch die Kristallisations-temperatur mitbestimmt. Dieser Einflüß ist aus Arbeiten ohne Impfkristallen bereits bekannt, z.B. aus Z. Kristallogr. *129*, S. 396—404 (1969); Glastechn. Ber. *37*, 194—200 (1964).

Es ist überraschend, daß der Zusatz von Kristallkeimen nicht nur die Reaktionszeit deutlich verringert, sondern auch die Reinheit des Produktes wesentlich verbesert. Häufig wird sogar erst die Bildung einer speziellen Kristallphase bei der gewählten Kristallisationstemperatur ermöglicht, wenn ohne Kristallkeime eine andere — i.a. thermodynamisch stabilere — Kristallstruktur gebildet worden wäre.

Das erfindungsgemäße Verfahren kann im Vakuum, bei Normaldruck, sowie bei Überdruck durchgeführt werden. Bei der Wasserabspaltung ist ein Überdruck jedoch ungünstig. Bei der Kristallisation kann der Druck insbesondere 0,1 bis 20 bar betragen. Bevorzugt wird jedoch Normaldruck.

Die Kristallisation kann diskontinuierlich und kontinuierlich durchgeführt werden. Letzere Variante kann in einem Strömungsrohr oder in einem oder mehreren Rührkesseln durchgeführt werden.

Wie erwähnt, kommt es bei der Entwässerung zur Bildung eines Silikatschaums. Es ist vorteilhaft, den festen Schaum zu mahlen und erst dann das Silikat kristallisieren zu lassen, weil sich auf diese Weise der Platzbedarf bei der Kristallisation deutlich vermindert. Es ist auch möglich, die erste und die zweite Stufe in nur einem Apparat, beispielsweise einer beheizten Mühle durchzuführen. Die Temperatur der Mahlung ist nicht kritisch. Aus wirtschaftlichen Gründen ist es jedoch vorteilhaft, hierfür nicht abzukühlen.

Während des Kristallisierens muß ein Schmelzen vermieden werden, da gerade das entwässerte amorphe Natriumsilikat besonders gut zu kristallinen Natriumsilikaten umgewandelt werden kann. Die minimale Kristallisationstemperatur beträgt 450°C. Bevorzugt werden im allgemeinen Temperaturen zwischen 490 und 840°C. Die geeignete Temperatur wird am besten in Vorversuchen ermittelt. Sie ist vor allem abhängig vom Kristall-Typ des gewünschten kristallinen Natriumsilikats und dessen Zusammensetzung.

Es ist bekannt, daß in vielen Fällen verschiedene kristalline Modifikationen eines Stoffes bei unterschiedlichen Temperaturen verschiedene Stabilität aufweisen und sich daher ineinander umwandeln können, ähnlich der Umwandlung von Quarz in Tridymit und Cristobalit. Es ist aus diesem Grunde wichtig, für eine gezielte Synthese eines bestimmten Kristall-Typs die richtigen Reaktionsparameter, Molzusammensetzung, Temperatur und Zeit in Vorversuchen zu ermitteln. Wird nicht ein spezieller Kristall-Typ in reiner Form gewünscht und nur irgendein kristalliner Typ eines Natriumsilikats oder Gemische kristalliner Natriumsilikate, so ist das Einhalten spzieller Reaktionsbedingungen weniger wichtig.

Die Kristallisationszeit kann wenige Minuten bis zu wenigen Stunden betragen. In Ausnahmefällen sind auch mehrere Tage oder sogar Wochen notwendig. Die Kristallisationsdauer ist dabei stark abhängig von der Kristallisationstemperatur und dem gewünschten Kristall-Typ. Besonders rasch kristallisiert (nach Zugabe von Impfkristallen) Na-SKS-6, etwas langsamer Na-SKS-5 und Na-SKS-7. Mehrere Stunden benötigt bei niedrigerer Temperatur die Kristallisation von Na-SKS-11. Bei Na-SKS-6 sind wenige Minuten (eventuell sogar Bruchteile einer Minute) bei etwa 770 bis ca. 800°C ausreichend. Vorzugsweise wird bei der Herstellung von Na-SKS-6 im Temperaturintervall von 700—770°C 1—80 Minuten und im Temperaturintervall von 770—800°C 1—12 Minuten erhitzt. Vorausgesetzt wird hierbei, daß eine ausreichend hohe Kristallkeimkonzentration vorhanden ist und die Wärmezufuhr ausreichend ist (genügend große Heizoberfläche).

Bei dem erfindungsgemäßen Verfahren kann die Reaktionsmischung entwässert und kristallisiert werden, ohne daß gleichzeitig der Ansatz durchmischt wird. Es kann aber auch vorteilhaft sein, die Reaktionsmischung zeitweise gut zu durchmischen oder zu bewegen. Dies kann beispielsweise in einem Drehrohrofen geschehen.

Die Auskleidung des Reaktionsgefäßes kann durch metallische oder keramische Werkstoffe erfolgen. Das Oberflächenmaterial kann dabei in bekannter Weise bestimmte Kristall-Typen begünstigen.

Neben den Alkalimetallionen können zusätzlich auch andere Metallionen bei der Synthese anwesend seine, beispielsweise Bor, Germanium, Aluminium, Indium, Eisen, Arsen und Antimon sowie das Nichtmetall Phosphor. Sofern die Menge dieser Bestandteile, bezogen auf den Alkaligehalt, kleiner als 10% ist, wird die Synthese nur unwesentlich beeinflußt. Zur Herstellung eines reinen kristallinen Natriumsilikats ist es vorteilhaft, auf die Zugabe von Fremdmetallen bei der Synthese zu verzichten. Größere Anteile an Aluminium im Ausangsgemisch können zur Bildung von zeolithischen Nebenprodukten führen, ein geringer Aluminiumgehalt, wie er beispielsweise in technischem Wasserglas vorhanden ist, stört dagegen nicht.

Es ist ein Vorteil des Verfahrens, daß es ohne organische Verbindungen durchgeführt werden kann.

Es ist bekannt, daß kristalline Natriumsilikate mit einem $Na_2O:SiO_2$-Verhältnis von 1:2 bis 1:3 mit Mineralsäuren in die entsprechenden Kieselsäuren überführt werden können. Mit Strukturuntersuchungen und Intercalations-Untersuchungen ist nachgewiesen worden, daß diese Kieselsäuren schichtartige Struktur haben. Man kann annehmen, daß auch die nach dem erfindungsgemäß Verfahren hergestellten kristallinen Natriumsilikate Schichtstruktur haben. Sie werden deshalb hier als Natriumsalze von Schichtkieselsäuren oder abgekürzt Na-SKS bezeichnet.

In den Tabellen 1 bis 4 sind die charakteristischen Röntgenbeugungslinien einiger kristalliner Natriumsilikate, die etwa eine Zusammensetzung $Na_2Si_2O_5$ haben, aufgeführt. Na-SKS-5 ähnelt $\alpha$-$Na_2Si_2O_5$, Na-SKS-6 ähnelt $\delta$-$Na_2Si_2O_5$, Na-SKS-7 ähnelt $\beta$-$Na_2Si_2O_5$ und Na-SKS-11 ähnelt $\gamma$-$Na_2Si_2O_5$. Bei der Angabe der relativen Intensitäten werden 0 bis 25 als schwach, 25 bis 50 als mittel, 50 bis 75 als stark und 75 bis 100 als sehr stark zugrunde gelegt.

Die Erfindung wird durch die folgenden Beispiele näher erläutert.

## Beispiele

Versuchsdurchführung

In Beispiel 1 bis 3 werden jeweils 20 g Natronwasserglaslösung (Na 9/1 der Société Française Hoechst mit einem molaren $SiO_2:Na_2O$-Verhaltnis von 2,06 (±0,05): 1; Wassergehalt etwa 55%) in einen Nickeltiegel gegeben, der zuvor entweder in einem alkalischen Ultraschallbad oder in verdünnter Natronlauge bei 100—180°C gereinigt worden war.

Anschließend wird das Reaktionsgefäß in einen Ofen gestellt, der auf die gewählte Reaktionstemperatur vorgeheizt war. Dabei wird das Wasser rasch ausgetrieben und die Masse schäumt auf. Man erhält nach dem Abkühlen ein aufgeschäumtes Produkt.

## Beispiel 1 (Vergleichsbeispiel)

Der Teigel mit der Natronwasserglaslösung wird ohne Zugabe von Kristallkeimen eine Stunde auf 700°C erhitzt. Das Röntgenbeugungsdiagramm des Produktes ist in Tabelle 5 abgebildet. Man erhält ein Gemisch von Na-SKS-5 und Na-SKS-6.

## Beispiel 2

Man setzt der Wasserglaslösung 1,0 g Na-SKS-5 (mit geringer Verunreinigung an Na-SKS-6) zu und erhitzt die Reaktionsmischung eine Stunde auf 700°C. Das Röntgenbegungsdiagram des Produktes ist in Tabelle 6 abgebildet. Man erhält Na-SKS-5 mit geringer Verunreinigung an Na-SKS-6.

Na-SKS-5 läßt sich herstellen gemäß Glastechn. Ber. *37*, 194—200 (1964). Das Produkt hat die ungefähre Zusammensetzung $Na_2Si_2O_5$.

## Beispiel 3

Man setzt der Wasserglaslösung 1,0 g Na-SKS-6 zu und erhitzt die Reaktionsmischung eine Stunde auf 700°C. Das Röntgenbeugungsdiagramm des Produktes ist in Tabelle 7 aufgeführt. Man erhält Na-SKS-6.

Na-SKS-6 läßt sich herstellen gemäß Zeitschrift für Kristallogr. *129*, 396—404 (1969). Es hat die ungefähre Zusammensetzung $Na_2Si_2O_5$.

Beispiel 4 (Vergleichsbeispiel)

Man stellt durch Zugabe von Natriumhydroxid zu 20 g einer Natronwasserglaslösung mit dem molaren Verhältnis $SiO_2:Na_2O$ von etwa 3,3:1 (Wassergehalt etwa 65%) eine Lösung mit dem molaren Verhältnis $SiO_2:Na_2O$ von 1,75:1 her. Die Reaktionsmischung wird aufgeheizt und etwa 17 Stunden auf 550°C erhitzt. Das Röntgenbeugungsdiagram ist in Tabelle 8 aufgeführt. Man erhält ein Gemisch von Na-SKS-5 (viel), Na-SKS-6 (wenig), Na-SKS-7 und Na-SKS-11 (wenig).

Na-SKS-7 läßt sich herstellen gemäß Glastechn. Ber. *37*, 194—200 (1964) Na-SKS-11 läßt sich herstellen gemäß Glastechn. Ber. *37*, 194—200 (1964), sowie gemäß Zeitschrift für Kristallogr. *129*, 396—404 (1969).

Beispiel 5

Zu der Mischung aus Wasserglaslösung und NaOH von Beispiel 4 wird 1,0 g von Na-SKS-11 gegeben. Die Reaktionsmischung wird etwa 17 Stunden auf 550°C erhitzt. Das Röntgenbeugungsdiagramm ist in Tabelle 9 aufgeführt. Man erhält Na-SKS-11 mit geringen Verunreinigungen.

### TABELLE 1

#### Na-SKS-5

| d ($10^{-8}$ cm) | | rel. Intensität |
|---|---|---|
| 4,92 | (± 0,10) | m — st |
| 3,95 | (± 0,08) | schw |
| 3,85 | (± 0,08) | m — st |
| 3,77 | (± 0,08) | st — sst |
| 3,29 | (± 0,07) | sst |
| 3,20 | (± 0,06) | schw |
| 2,64 | (± 0,05) | schw — m |
| 2,53 | (± 0,05) | schw |
| 2,45 | (± 0,05) | m — st |
| 2,41 | (± 0,05) | schw |
| 2,38 | (± 0,05) | schw) |

### TABELLE 2

#### Na-SKS-6

| d ($10^{-8}$ cm) | | rel. Intensität |
|---|---|---|
| 4,92 | (± 0,10) | schw |
| 3,97 | (± 0,08) | sst |
| 3,79 | (± 0,08) | m —st |
| 3,31 | (± 0,07) | schw |
| 3,02 | (± 0,06) | schw — m |
| 2,85 | (± 0,06) | schw |
| 2,65 | (± 0,05) | schw |
| 2,49 | (± 0,05) | schw |
| 2,43 | (± 0,05) | m |

## TABELLE 3

### Na-SKS-7

| d ($10^{-8}$ cm) | | rel. Intensität |
|---|---|---|
| 7,96 | (± 0,16) | schw |
| 6,00 | (± 0,12) | st — sst |
| 5,48 | (± 0,11) | schw |
| 4,92 | (± 0,11) | schw |
| 4,30 | (± 0,09) | m |
| 4,15 | (± 0,08) | st |
| 3,96 | (± 0,08) | st — sst |
| 3,78 | (± 0,08) | m — st |
| 3,63 | (± 0,07) | sst |
| 3,31 | (± 0,07) | schw |
| 3,12 | (± 0,06) | schw — m |
| 3,08 | (± 0,06) | schw — m |
| 3,06 | (± 0,06) | m — st |
| 2,97 | (± 0,06) | st — sst |
| 2,85 | (± 0,06) | schw |
| 2,70 | (± 0,05) | schw — m |
| 2,66 | (± 0,05) | m — st |
| 2,63 | (± 0,05) | schw |
| 2,59 | (± 0,06) | schw — m |
| 2,54 | (± 0,05) | schw — m |
| 2,43 | (± 0,05) | sst |

## TABELLE 4

### Na-SKS-11

| d ($10^{-8}$ cm) | | rel. Intensität |
|---|---|---|
| 6,08 | (± 0,12) | schw |
| 5,88 | (± 0,12) | schw — m |
| 4,22 | (± 0,08) | sst |
| 3,26 | (± 0,07) | schw — m |
| 3,03 | (± 0,06) | schw — m |

TABELLE 4 (Fortsetzung)

Na-SKS-11

| d (10⁻⁸ cm) | | rel. Intensität |
|---|---|---|
| 2,94 | (± 0,06) | m |
| 2,89 | (± 0,06) | schw |
| 2,64 | (± 0,05) | schw — m |
| 2,56 | (± 0,05) | schw — m |
| 2,49 | (± 0,05) | schw |
| 2,43 | (± 0,05) | schw |

TABELLE 5

(Beispiel 1)

| 2THETA | d | I/Io |
|---|---|---|
| 12,90 | 6,86 | 3 |
| 14,80 | 5,98 | 28 |
| 16,30 | 5,43 | 4 |
| 18,00 | 4,92 | 46 |
| 20,80 | 4,27 | 11 |
| 21,20 | 4,19 | 11 |
| 21,50 | 4,13 | 21 |
| 21,90 | 4,06 | 1 |
| 22,50 | 3,95 | 86 |
| 23,10 | 3,85 | 35 |
| 23,55 | 3,77 | 100 |
| 24,60 | 3,62 | 36 |
| 25,70 | 3,46 | 4 |
| 25,90 | 3,44 | 6 |
| 27,00 | 3,30 | 70 |
| 27,90 | 3,20 | 16 |
| 28,75 | 3,10 | 11 |
| 29,20 | 3,06 | 17 |
| 29,60 | 3,02 | 15 |
| 30,20 | 2,96 | 29 |

TABELLE 5 (Fortsetzung)

(Beispiel 1)

| 2THETA | d | I/Io |
|---|---|---|
| 30,85 | 2,90 | 9 |
| 31,50 | 2,84 | 11 |
| 32,90 | 2,72 | 4 |
| 33,30 | 2,69 | 7 |
| 33,85 | 2,65 | 26 |
| 34,65 | 2,59 | 11 |
| 35,40 | 2,53 | 20 |
| 36,10 | 2,49 | 9 |
| 36,65 | 2,45 | 31 |
| 37,10 | 2,42 | 46 |
| 37,75 | 2,38 | 11 |
| 38,60 | 2,33 | 3 |
| 39,70 | 2,27 | 3 |

TABELLE 6

(Beispiel 2)

| 2THETA | d | I/Io |
|---|---|---|
| 14,70 | 6,02 | 6 |
| 18,00 | 4,92 | 60 |
| 21,30 | 4,17 | 6 |
| 22,50 | 3,95 | 51 |
| 23,10 | 3,85 | 53 |
| 23,55 | 3,77 | 100 |
| 24,60 | 3,62 | 8 |
| 25,65 | 3,47 | 4 |
| 25,95 | 3,43 | 4 |
| 27,10 | 3,29 | 99 |
| 27,80 | 3,21 | 20 |
| 28,80 | 3,10 | 6 |
| 29,55 | 3,02 | 9 |

TABELLE 6 (Fortsetzung)

(Beispiel 2)

| 2THETA | d | I/Io |
|--------|------|------|
| 30,15 | 2,96 | 6 |
| 30,80 | 2,90 | 3 |
| 31,50 | 2,84 | 6 |
| 32,70 | 2,74 | 4 |
| 33,95 | 2,64 | 25 |
| 35,45 | 2,53 | 17 |
| 36,10 | 2,49 | 6 |
| 36,65 | 2,45 | 38 |
| 37,10 | 2,42 | 26 |
| 37,75 | 2,38 | 17 |

TABELLE 7

(Beispiel 3)

| 2THETA | d | I/Io |
|--------|------|------|
| 12,90 | 6,86 | 3 |
| 14,80 | 5,98 | 18 |
| 18,10 | 4,90 | 11 |
| 20,80 | 4,27 | 8 |
| 21,20 | 4,19 | 13 |
| 21,50 | 4,13 | 15 |
| 22,50 | 3,95 | 100 |
| 23,55 | 3,77 | 47 |
| 24,50 | 3,63 | 27 |
| 25,90 | 3,44 | 9 |
| 27,00 | 3,30 | 7 |
| 27,80 | 3,21 | 2 |
| 28,70 | 3,11 | 8 |
| 29,20 | 3,06 | 11 |
| 29,60 | 3,02 | 18 |
| 30,15 | 2,96 | 19 |

TABELLE 7 (Fortsetzung)

(Beispiel 3)

| 2THETA | d | I/Io |
|--------|------|------|
| 30,80 | 2,90 | 10 |
| 31,50 | 2,84 | 13 |
| 33,00 | 2,71 | 4 |
| 33,30 | 2,69 | 6 |
| 33,70 | 2,66 | 11 |
| 34,70 | 2,58 | 8 |
| 35,00 | 2,56 | 7 |
| 35,45 | 2,53 | 7 |
| 36,00 | 2,49 | 12 |
| 37,10 | 2,42 | 47 |
| 39,35 | 2,29 | 4 |

TABELLE 8

(Beispiel 4)

| 2THETA | d | I/Io |
|--------|------|------|
| 14,90 | 5,94 | 26 |
| 18,05 | 4,91 | 56 |
| 20,75 | 4,28 | 7 |
| 21,50 | 4,13 | 12 |
| 22,45 | 3,96 | 42 |
| 23,10 | 3,85 | 48 |
| 23,50 | 3,78 | 100 |
| 24,55 | 3,62 | 33 |
| 27,00 | 3,30 | 92 |
| 27,80 | 3,21 | 20 |
| 28,70 | 3,11 | 14 |
| 29,20 | 3,06 | 28 |
| 30,00 | 2,98 | 30 |
| 30,75 | 2,91 | 5 |
| 31,50 | 2,84 | 5 |

TABELLE 8 (Fortsetzung)

(Beispiel 4)

| 2THETA | d | I/Io. |
|--------|------|-----|
| 33,80 | 2,65 | 31 |
| 34,60 | 2,59 | 15 |
| 35,45 | 2,53 | 18 |
| 36,60 | 2,45 | 43 |
| 37,00 | 2,43 | 57 |
| 37,75 | 2,38 | 14 |
| 42,10 | 2,14 | 4 |
| 43,20 | 2,09 | 7 |
| 45,20 | 2,00 | 7 |
| 46,00 | 1,971 | 12 |
| 46,60 | 1,947 | 12 |
| 47,90 | 1,898 | 9 |
| 48,60 | 1,872 | 21 |
| 49,50 | 1,840 | 11 |

TABELLE 9

(Beispiel 5)

| 2THETA | d | I/Io |
|--------|------|-----|
| 14,60 | 6,06 | 11 |
| 14,80 | 5,98 | 12 |
| 15,05 | 5,88 | 29 |
| 16,80 | 5,27 | 4 |
| 17,95 | 4,94 | 11 |
| 21,10 | 4,21 | 100 |
| 21,50 | 4,13 | 10 |
| 22,50 | 3,95 | 11 |
| 23,10 | 3,85 | 9. |
| 23,50 | 3,78 | 19 |
| 23,90 | 3,72 | 5 |
| 24,50 | 3,63 | 12 |

TABELLE 9 (Fortsetzung)

(Beispiel 5)

| 2THETA | d | I/Io |
|---|---|---|
| 25,00 | 3,56 | 5 |
| 25,75 | 3,46 | 5 |
| 26,00 | 3,42 | 5 |
| 27,00 | 3,30 | 19 |
| 27,40 | 3,25 | 15 |
| 27,70 | 3,22 | 7 |
| 28,40 | 3,14 | 6 |
| 28,75 | 3,10 | 8 |
| 29,50 | 3,03 | 35 |
| 30,10 | 2,97 | 19 |
| 30,45 | 2,93 | 30 |
| 31,00 | 2,88 | 8 |
| 32,50 | 2,75 | 2 |
| 33,35 | 2,68 | 10 |
| 34,00 | 2,63 | 25 |
| 34,20 | 2,62 | 17 |
| 35,05 | 2,56 | 22 |
| 35,80 | 2,51 | 5 |
| 36,60 | 2,45 | 8 |
| 37,00 | 2,43 | 19 |
| 37,80 | 2,38 | 4 |
| 38,95 | 2,31 | 9 |
| 40,00 | 2,25 | 2 |
| 40,60 | 2,22 | 5 |
| 41,50 | 2,17 | 5 |
| 42,05 | 2,15 | 7 |
| 44,20 | 2,05 | 3 |
| 46,00 | 1,971 | 4 |
| 48,10 | 1,890 | 5 |
| 48,70 | 1,868 | 5 |

12

# EP 0 164 552 B1

## Patentansprüche

1. Verfahren zur Herstellung von kristallinen Natriumsilikaten mit Schichtstruktur und einem Molverhältnis $SiO_2/Na_2O$ von 1,9:1 bis 3,5:1 aus amorphen Natriumsilikat bei erhöhter Temperatur, dadurch gekennzeichnet, daß man wasserhaltiges amorphes Natriumsilikat mit einem Molverhältnis $SiO_2/Na_2O$ von 1,7:1 bis 3,75:1 und einem Wassergehalt von 5 bis 95 Gew.-% mit 0,01 bis 30 Gew.-Teilen des herzustellenden kristallinen Natriumsilikats (pro 100 Gew.-Teile $Na_2O + SiO_2$ im wasserhaltigen amorphen Natriumsilikat) versetzt, man die Reaktionsmischung durch Erhitzen entwässert und man die entwässerte Reaktionsmischung solange bei einer Temperatur hält, die mindestens 450°C beträgt jedoch unter dem Schmelzpunkt liegt, bis das Natriumsilikat kristallisiert ist.

2. Verfahren nach Anspruch 1, dadurch gekennzeichnet, daß man das eingesetzte wasserhaltige amorphe Natriumsilikat mit 1 bis 15 Gew.-Teilen des herzustellenden kristallinen Natriumsilikats (pro 100 Gew.-Teile $Na_2O + SiO_2$ im wasserhaltigen amorphen Natriumsilikat) versetzt.

3. Verfahren nach Anspruch 1, dadurch gekennzeichnet, daß das eingesetzte amorphe Natriumsilikat einen Wassergehalt von 15—26 Gew.-% aufweist.

4. Verfahren nach Anspruch 1, dadurch gekennzeichnet, daß das eingesetzte Natriumsilikat einen Wassergehalt von 50—70 Gew.-% aufweist.

5. Verfahren nach Anspruch 1, dadurch gekennzeichnet, daß sowohl das amorphe wasserhaltige wie auch das zugegebene kristallisierte Natriumsilikat ein Molverhältnis $SiO_2/Na_2O$ von 1,7:1 bis 2,3:1 aufweist.

6. Verfahren nach Anspruch 1, dadurch gekennzeichnet, daß man die entwässerte Reaktionsmischung mechanisch zerkleinert und dann solange bei einer Temperatur hält, die mindestens 450°C beträgt jedoch unter dem Schmelzpunkt liegt, bis das Natriumsilikat kristallisiert ist.

7. Verfahren nach Anspruch 1, dadurch gekennzeichnet, daß das zugesetzte kristalline Natriumsilikat ein Molverhältnis $SiO_2/Na_2O$ von etwa 2:1 aufweist.

8. Verfahren nach Anspruch 7, dadurch gekennzeichnet, daß das zugesetzte Natriumsilikat das folgende Röntgenspektrum aufweist:

| d ($10^{-8}$ cm) | | rel. Intensität |
|---|---|---|
| 4,92 | (± 0,10) | schw |
| 3,97 | (± 0,08) | sst |
| 3,79 | (± 0,08) | m — st |
| 3,31 | (± 0,07) | schw |
| 3,02 | (± 0,06) | schw — m |
| 2,85 | (± 0,06) | schw |
| 2.65 | (± 0,05) | schw |
| 2,49 | (± 0,05) | schw |
| 2,43 | (± 0,05) | m |

9. Verfahren nach Anspruch 8, dadurch gekennzeichnet, daß man die Kristallisation im Bereich von 700—800°C durchführt.

10. Verfahren nach Anspruch 9, dadurch gekennzeichnet, daß man die entwässerte Reaktionsmischung 1—80 Minuten auf 700—770°C erhitzt.

11. Verfahren nach Anspruch 9, dadurch gekennzeichnet, daß man die entwässerte Reaktionsmischung 1—12 Minuten auf 770—800°C erhitzt.

## Revendications

1. Procédé de préparation de silicates de sodium cristallisés à structure en couches (appelés phyllosilicates), de rapport molaire $SiO_2/Na_2O$ compris entre 1,9 et 3,5 à partir d'un silicate de sodium amorphe, à une température élevée, procédé caractérisé en ce qu'à du silicate de sodium amorphe aqueux d'un rapport molaire $SiO_2/Na_2O$ compris entre 1,7 et 3,75 et contenant de 5 à 95% en poids d'eau on ajoute de 0,01 à 30 parties en poids du silicate de sodium cristallisé que l'on veut obtenir (pour 100 parties en poids de $Na_2O + SiO_2$ du silicate de sodium amorphe aqueux), on déshydrate le mélange de réaction en le chauffant puis on maintient le mélange déshydraté à une température d'au moins 450°C mais inférieure au point de fusion jusqu'à ce que le silicate de sodium soit cristallisé.

2. Procédé selon la revendication 1, caractérisé en ce que l'on ajoute au silicate de sodium amorphe

13

aqueux de 1 à 15 parties en poids du silicate de sodium cristalisé que l'on veut obtenir pour 100 parties en poids de $Na_2O + SiO_2$ du silicate de sodium amorphe aqueux.

3. Procédé selon la revendication 1, caractérisé en ce que le silicate de sodium amorphe employé a une teneur en eau de 15 à 26% en poids.

4. Procédé selon la revendication 1, caractérisé en ce que le silicate do sodium employé a une teneur en eau de 50 à 70% en poids.

5. Procédé selon la revendication 1, caractérisé en ce que dans le silicate de sodium amorphe aqueux et dans le silicate de sodium cristallisé ajouté le rapport molaire $SiO_2/Na_2O$ est compris entre 1,7 et 2,3.

6. Procédé selon la revendication 1, caractérisé en ce que l'on broie mécaniquement le mélange de réaction déshydraté puis on le maintient à une température d'au moins 450°C mais inférieure au point de fusion jusqu'à ce que le silicate de sodium soit cristallisé.

7. Procédé selon la revendication 1, caractérisé en ce que dans le silicate de sodium cristallisé ajouté le rapport molaire $SiO_2/Na_2O$ est d'environ 2.

8. Procédé selon la revendication 1, caractérisé en ce que le silicate de sodium ajouté présente le spectre de diffraction de rayons X suivant:

| d ($10^{-8}$ cm) | | Intensité relative |
|---|---|---|
| 4,92 | (± 0,10) | fa |
| 3,97 | (± 0,08) | t fo |
| 3,79 | (± 0,08) | m — fo |
| 3,31 | (± 0,07) | fa |
| 3,02 | (± 0,06) | fa — m |
| 2,85 | (± 0,06) | fa |
| 2,65 | (± 0,05) | fa |
| 2,49 | (± 0,05) | fa |
| 2,43 | (± 0,05) | m |

9. Procédé selon la revendication 8, caractérisé en ce que l'on effectue la cristallisation entre 700 et 800°C.

10. Procédé selon la revendication 9, caractérisé en ce que l'on chauffe le mélange de réaction déshydraté pendant 1 à 80 minutes entre 700 et 770°C.

11. Procédé selon la revendication 9, caractérisé en ce que l'on chauffe le mélange de réaction déshydrate pendant 1 à 12 minutes entre 770 et 800°C.

## Claims

1. A process for the preparation of crystalline sodium silicates of laminate structure and with a molar ratio $SiO_2/Na_2O$ of 1.9:1 to 3.5:1 from amorphous sodium silicate at elevated temperature, which comprises adding to water-containing amorphous sodium silicate with a molar ratio $SiO_2/Na_2O$ of 1.7:1 to 3.75:1, and a water content of 5 to 95% by weight, 0.01 to 30 parts by weight of the crystalline sodium silicate to be prepared (per 100 parts by weight of $Na_2O + SiO_2$ in the water-containing amorphous silicate), dehydrating the reaction mixture by heating, and keeping the dehydrated reaction mixture at a temperature of at least 450°C, but below the melting point, until the sodium silicate has crystallized.

2. The process as claimed in claim 1, wherein 1 to 15 parts by weight of the crystalline sodium silicate to be prepared (per 100 parts by weight of $Na_2O + SiO_2$ in the water-containing amorphous sodium silicate) are added to the water-containing amorphous sodium silicate used.

3. The process as claimed in claim 1, wherein the amorphous sodium silicate used has a water content of 15—26% by weight.

4. The process as claimed in claim 1, wherein the sodium silicate used has a water content of 50—70% by weight.

5. The process as claimed in claim 1, wherein both the amorphous water-containing sodium silicate and the added crystalline sodium silicate have a molar ratio $SiO_2/Na_2O$ of 1.7:1 to 2.3:1.

6. The process as claimed in claim 1, wherein the dehydrated reaction mixture is comminuted mechanically and is then kept at a temperature which is at least 450°C, but is below the melting point, until the sodium silicate has crystallized.

7. The process as claimed in claim 1, wherein the added crystalline sodium silicate has a molar ratio $SiO_2/Na_2O$ of about 2:1.

8. The process as claimed in claim 7, wherein the added sodium silicate has the following X-ray spectrum:

| d ($10^{-8}$ cm) | | rel. intensity |
|---|---|---|
| 4.92 | ($\pm$ 0.10) | weak |
| 3.97 | ($\pm$ 0.08) | v. strong |
| 3.79 | ($\pm$ 0.08) | medium-strong |
| 3.31 | ($\pm$ 0.07) | weak |
| 3.02 | ($\pm$ 0.06) | weak-medium |
| 2.85 | ($\pm$ 0.06) | weak |
| 2.65 | ($\pm$ 0.05) | weak |
| 2.49 | ($\pm$ 0.05) | weak |
| 2.43 | ($\pm$ 0.05) | medium |

9. The process as claimed in claim 8, wherein the crystallization is carried out in the range from 700 to 800°C.

10. The process as claimed in claim 9, wherein the dehydrated reaction mixture is heated at 700—770°C for 1—80 minutes.

11. The process as claimed in claim 9, wherein the dehydrated reaction mixture is heated at 770—800°C for 1—12 minutes.